# EUROPEAN PATENT SPECIFICATION

(11) **EP 3 045 685 B1**
(45) Date of publication and mention of the grant of the patent: **19.04.2023**
(21) Application number: 15190242.6
(22) Date of filing: 16.10.2015
(51) Int. Cl.: F01D 25/24

(54) **MECHANICAL CONNECTING JOINT AND CORRESPONDING VANE ATTACHMENT ASSEMBLY**
MECHANISCHE VERBINDUNG UND ZUGEHÖRIGE LEITSCHAUFELBEFESTIGUNGSANORDNUNG
FIXATION MÉCANIQUE ET AGENCEMENT ASSOCIÉ DE FIXATION D'AUBE DE REDRESSEUR

(30) Priority: 15.12.2014 US 201414569823
(43) Date of publication of application: 20.07.2016
(73) Proprietor: General Electric Company, Schenectady, NY 12345 (US)
(72) Inventor: WEAVER, Matthew Mark, Cincinnati, OH 45215 (US); HILE, Michael Alan, Cincinnati, OH 45215 (US); ALBERS, Kathleen Elizabeth, Cincinnati, OH 45215 (US)
(74) Representative: Openshaw & Co.

(56) References cited:
- EP-A1- 2 540 994
- EP-A1- 2 960 440
- EP-A2- 2 543 826
- WO-A1-2014/107217
- WO-A1-2014/120334
- WO-A1-2016/059348
- GB-A- 2 267 541
- US-A- 5 580 219
- US-A1- 2012 301 317
- US-A1- 2014 147 264

## Description

### BACKGROUND

This description relates to component connection assemblies, and, more particularly, to a component connection assembly that includes materials having different coefficients of thermal expansion (CTE). The present invention relates to a mechanical connecting joint and to a vane attachment assembly.

At least some known applications of coupling components formed of ceramic matrix composite material (CMC) to components formed of metal in high temperature environments because there typically is a difference in CTE between the two materials. Typically, a clamping load applied to CMC between two pieces of metal will be decreased as the component reaches its high temperature operating condition and the metal grows faster and to a greater degree than the CMC. This loss in clamping load is almost always unacceptable and difficult to overcome in design.

The attachment of load bearing CMC component elements has been attempted with bolted joints that include spring elements to maintain clamping load at elevated temperatures. High CTE materials such as A-286 have been used as spacers to compensate for the low CTE of the CMC. Non-cantilevered nozzles and shrouds have also used pin elements to limited success.

GB2267541A describes an assembly for supporting knitted ceramic outlet guide vanes in a gas turbine engine. WO2014/107217A1 describes turbine nozzles for gas turbine engines incorporating airfoils made of a low-ductility material. US2014/147264A1 describes a turbine nozzle comprising a plurality of composite material vanes. US2012/301317A1 describes a hybrid rotor disk assembly with ceramic matrix composites platform for a gas turbine engine

### BRIEF DESCRIPTION

The invention is set out in the appended set of claims.

### BRIEF DESCRIPTION OF THE DRAWINGS

FIGS. 1-8 show example embodiments of the method and apparatus described herein.
FIG. 1 is a cross-sectional schematic illustration of an exemplary gas turbine engine assembly having a longitudinal axis.
FIG. 2 is a cross-section of a portion of gas turbine engine assembly shown in FIG. 1 in accordance with an example embodiment of the present disclosure.
FIG. 3 is a radially inwardly looking view of a portion of gas turbine engine assembly shown in FIG. 1 in accordance with an example embodiment of the present disclosure.
FIG. 4 is a radially inwardly looking view of the portion of the gas turbine engine assembly shown in FIG. 1 in accordance with another embodiment of the present disclosure.
FIG. 5 is a side elevation view of a mechanical connecting joint in accordance with an example embodiment of the present disclosure.
FIG. 6 is a plan view of a mechanical connecting joint in accordance with another example embodiment of the present disclosure.
FIG. 7 is a perspective view of a cantilevered solid doublet CMC vane including the vane hanger and shank shown in FIG. 2 and a metal mid seal.
FIG. 8 is a perspective view cantilevered solid doublet CMC vane showing only the CMC parts.

Although specific features of various embodiments may be shown in some drawings and not in others, this is for convenience only. Any feature of any drawing may be referenced in combination with any feature of any other drawing.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

The following detailed description illustrates embodiments of the disclosure by way of example and not by way of limitation. It is contemplated that the disclosure has general application to analytical and methodical embodiments of joining components having a high CTE with components having a low CTE in industrial, commercial, and residential applications.

Embodiments of the present disclosure describe an attachment configuration for joining two components, for example, a Ceramic Matrix Composite (CMC) vane to a metal airfoil hanger. Although described herein in terms of a cantilevered solid doublet CMC vane, the attachment configuration should be understood to be applicable for any CMC to metal component joint applied to other CMC vanes and structures. As described herein, a metallic hanger is fitted between and pinned to the two CMC vane mounting shanks that extend from the airfoils as continuous plies through the outer end wall. The metallic pins and hanger are fitted with the CMC such that the desired clamping load is achieved as the metal out grows the CMC at operating temperature. The same attachment configuration can be used to mount the metallic inner mid-seal box between vane shanks extending through the inner flow path end wall.

Metallic components being attached to the CMC vane are configured so that they are constrained between or inside the CMC. It therefore uses the difference in coefficient of thermal expansion (CTE) between the CMC and metal to increase the clamping load between the parts at elevated operating temperatures rather than decrease it. For example, in a connection of a cantilevered CMC doublet vane including solid airfoils and integral CMC flow path end walls, a metallic hanger is fitted between and pinned to the two CMC vane mounting shanks. The metallic hanger is fitted between the CMC vane shanks such that the desired clamping load is achieved as the metal out grows the CMC at operating temperature. Likewise, the metallic pin (or shoulder bolt) to CMC hole is sized so that the desired fit is achieved at operating temperature.

The following description refers to the accompanying drawings, in which, in the absence of a contrary representation, the same numbers in different drawings represent similar elements.

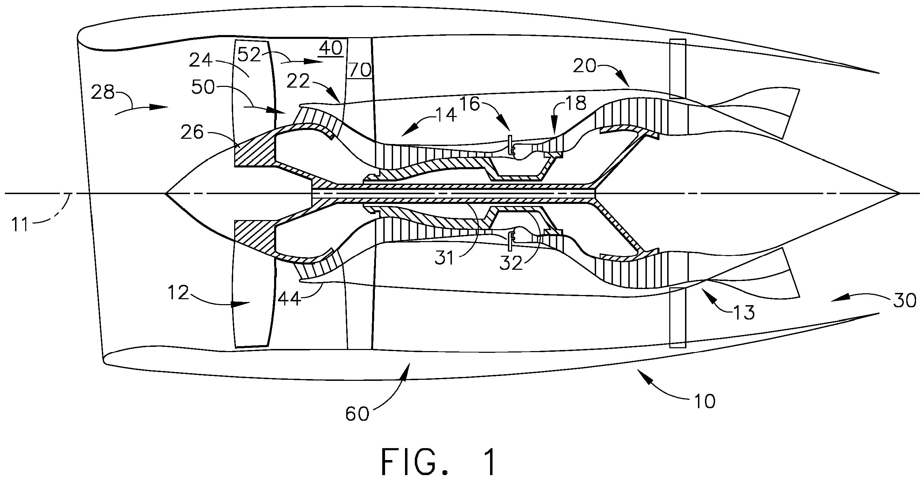

FIG. 1 is a cross-sectional schematic illustration of an exemplary gas turbine engine assembly 10 having a longitudinal axis 11. Gas turbine engine assembly 10 includes a fan assembly 12 and a core gas turbine engine 13. Core gas turbine engine 13 includes a high pressure compressor 14, a combustor 16, and a high pressure turbine 18. In the exemplary embodiment, gas turbine engine assembly 10 also includes a low pressure turbine 20, and a multi-stage booster compressor 22, and a splitter 44 that substantially circumscribes booster 22.

Fan assembly 12 includes an array of fan blades 24 extending radially outward from a rotor disk 26. Gas turbine engine assembly 10 has an intake side 28 and an exhaust side 30. Fan assembly 12, booster 22, and turbine 20 are coupled together by a first rotor shaft 31, and compressor 14 and turbine 18 are coupled together by a second rotor shaft 32. In the exemplary embodiment, engine assembly 10 may be, but is not limited to being, a LEAP or Passport 20 gas turbine engine available from General Electric Company, Cincinnati, Ohio.

In operation, air flows through fan assembly 12 and a first portion 50 of the airflow is channeled through booster 22. The compressed air that is discharged from booster 22 is channeled through compressor 14 wherein the airflow is further compressed and delivered to combustor 16. Hot products of combustion (not shown in FIG. 1) from combustor 16 are utilized to drive turbines 18 and 20, and turbine 20 is utilized to drive fan assembly 12 and booster 22 by way of shaft 31. Gas turbine engine assembly 10 is operable at a range of operating conditions between design operating conditions and off-design operating conditions.

A second portion 52 of the airflow discharged from fan assembly 12 is channeled through a bypass duct 40 to bypass a portion of the airflow from fan assembly 12 around the core gas turbine engine 13. More specifically, bypass duct 40 extends between a fan casing 42 and splitter 44. Accordingly, a first portion 50 of the airflow from fan assembly 12 is channeled through booster 22 and then into compressor 14 as described above and a second portion 52 of the airflow from fan assembly 12 is channeled through bypass duct 40 to provide thrust for an aircraft, for example. Gas turbine engine assembly 10 also includes a fan frame assembly 60 to provide structural support for fan assembly 12 and is also utilized to couple fan assembly 12 to core gas turbine engine 13.

Fan frame assembly 60 includes a plurality of outlet guide vanes 70 that typically extend substantially radially, between a radially-outer mounting flange and a radially-inner mounting flange, and are circumferentially-spaced within bypass duct 40. Guide vanes 70 serve to turn the airflow downstream from rotating blades such as fan blades 24.

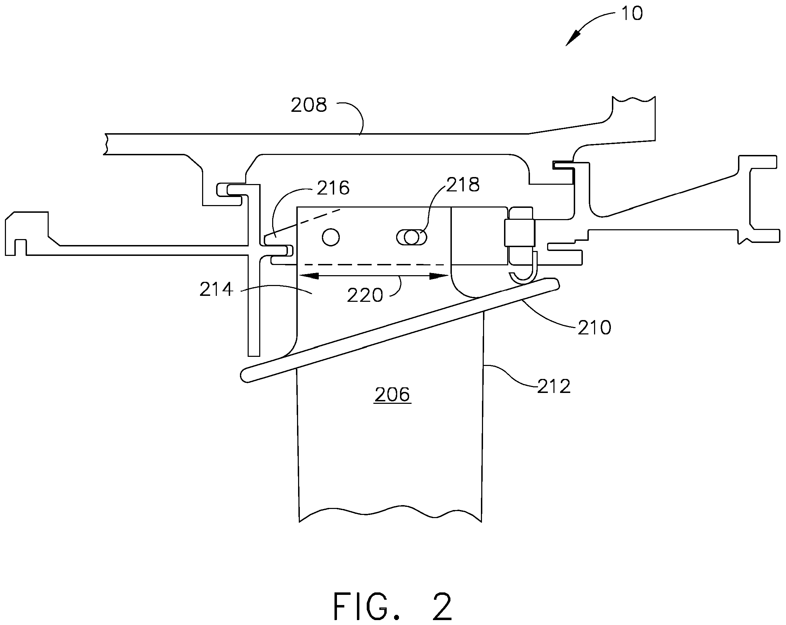

FIG. 2 is a cross-section of a portion of gas turbine engine assembly 10 (shown in FIG. 1) in accordance with an example embodiment of the present disclosure. In the example embodiment, a rotatable member 202 includes a plurality of radially outwardly extending blades 204. Blades 204 are interdigitated with stationary vanes 206 that extend radially inwardly from a casing 208 circumscribing rotatable member 202. Stationary vane 206 includes a platform 210, an airfoil 212 extending radially inwardly from platform 210, and a shank 214 extending radially outwardly from platform 210. Stationary vane 206 is coupled to casing 208 via a metal vane hanger 216. A slot 218 in CMC vane shank 214 allows for differential growth along a length 220 of shank 214.

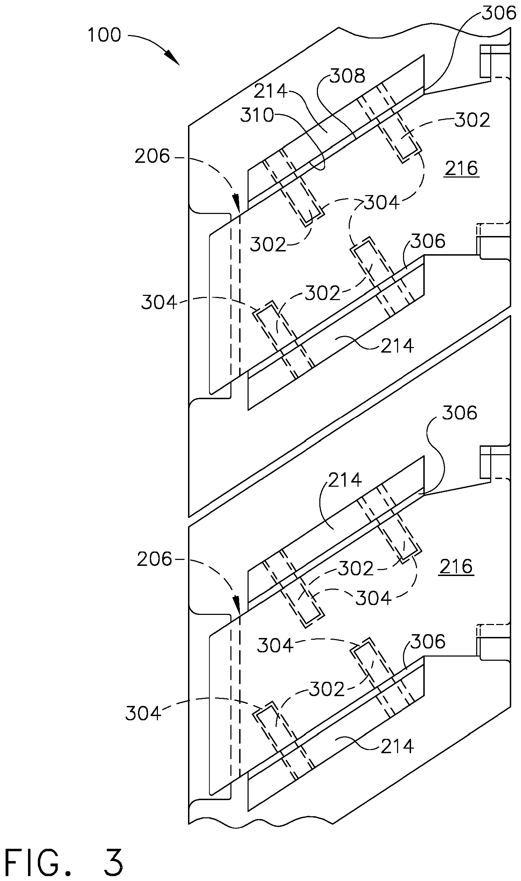

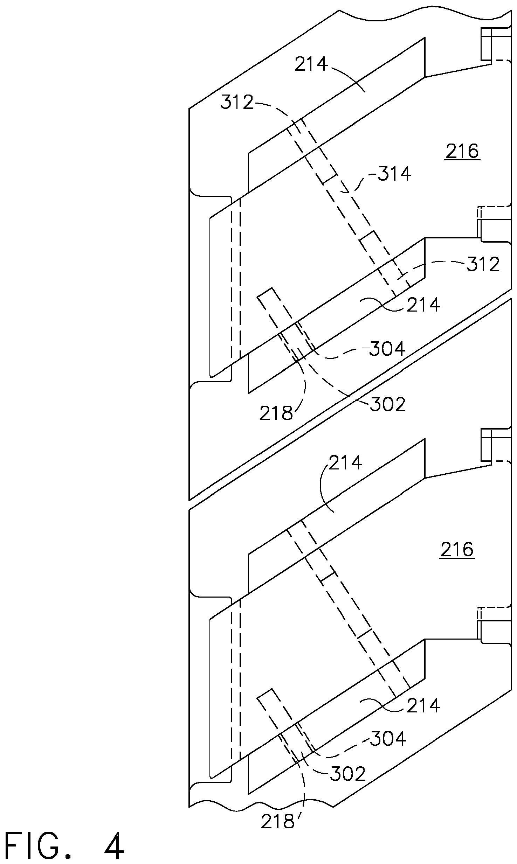

FIG. 3 is a radially inwardly looking view of a portion of gas turbine engine assembly 10 (shown in FIG. 1) in accordance with an example embodiment of the present disclosure. FIG. 4 is a radially inwardly looking view of the portion of gas turbine engine assembly 10 (shown in FIG. 1) in accordance with another embodiment of the present disclosure. In the example embodiment, vane 206 is formed of a ceramic matrix composite (CMC) material having a first coefficient of thermal expansion (CTE). The only part of vane 206 that is visible in FIG. 3 is shank 214. Vane 206 exceeds into the page obscured by vane hanger 216. One or more locating or drift pins 302 extend from within shank 214 into vane hanger 216. Pins 302 may fit loosely into a respective bore 304 in each of shank 214 and may expand at operating temperature to a tight fit within bore 304 of shank 214. In various embodiments, a gap 306 is formed between shank 214 and vane hanger 216. Gap 306 permits easy installation during an assembly process. When gas turbine engine assembly 10 (shown in FIG. 1) heats up during startup, gap 306 is reduced. In one embodiment gap 306 is reduced to approximately zero distance, meaning that a surface 308 of vane hanger 216 bears directly on a surface 310 of shank 214 and/or vane hanger 216. Because vane hanger 216 expands at a different rate than shank 214 because of a difference of CTE of the different materials of which shank 214 and vane hanger 216 are formed, vane hanger 216 expands to take up gap 306, touches shank 214 and applies a force against shank 214. The force is predetermined based on dimensions of shank 214 and vane hanger 216, their respective CTEs, and an expected operating temperature of gas turbine engine assembly 10 (shown in FIG. 1). In another embodiment, three pins are used instead of four pins 302 as shown in FIG. 3. A pair of pins 312 may share a through bore 314 that extends through shank 214 and vane hanger 216.

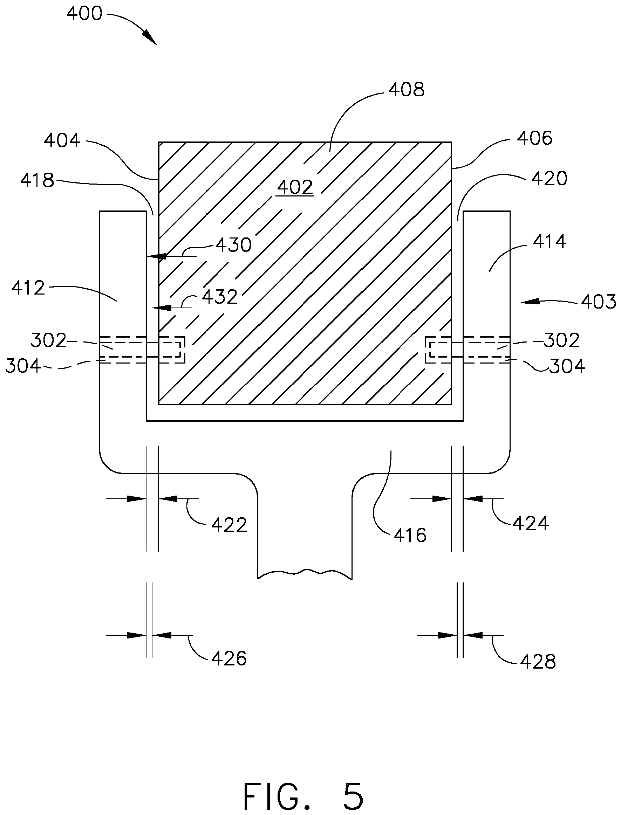

FIG. 5 is a side elevation view of a mechanical connecting joint 400 in accordance with an example embodiment of the present disclosure. In one embodiment mechanical connecting joint 400 is configured to join a first joint member 402, such as, but, not limited to vane hanger 216 to a second joint member 403. First joint member 402 is formed of a material having a first coefficient of thermal expansion (CTE) value, for example, a metal or metallic material, First joint member 402 includes a first sidewall 404, a second opposite sidewall 406, and a body 408 extending therebetween. Second joint member 403, such as, but, not limited to shank 214, is formed of a ceramic matrix composite (CMC) material having a second CTE value, the second CTE being less than the first CTE. Second joint member 403 is formed of a includes a first leg 412 facing first sidewall 404, a second leg 414 facing second sidewall 406, and a connecting member 416 extending between first leg 412 and second leg 414. A first gap 418 is defined between first joint member 402 and first leg 412. A second gap 420 is defined between first joint member 402 and second leg 414.

First gap 418 defines a first distance 422 between first joint member 402 and first leg 412 at a first temperature and a second distance 426 between first joint member 402 and first leg 412 at a second temperature, second distance 426 being different than first distance 422 and the second temperature being different than the first temperature. In the example embodiment, a change in distance between second distance 426 and first distance 422 is inversely related to a change in temperature between the second temperature and the first temperature. First joint member 402 exerts a first force 430 against first leg 402 at the first temperature and exerts a second force 432 against first leg 412 at the second temperature wherein second force 432 is greater than first force 430 and the second temperature is greater than the first temperature.

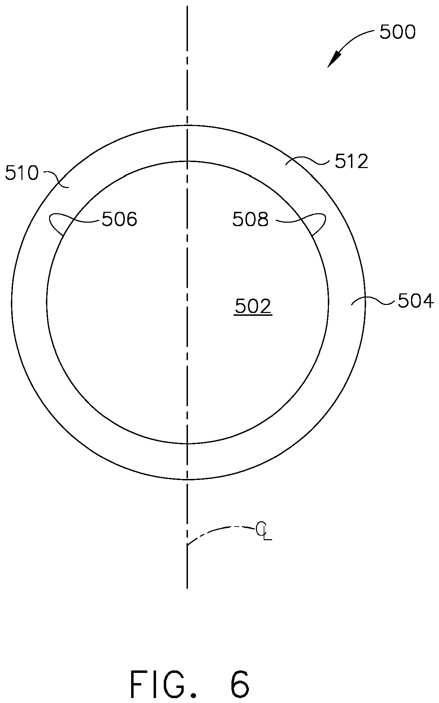

FIG. 6 is a plan view of a mechanical connecting joint 500 in accordance with another example embodiment of the present disclosure. In one embodiment mechanical connecting joint 500 is configured to join a first joint member 502 to a second joint member 504. In the example embodiment, a first sidewall 506 and a second opposite sidewall 508 are arcuately shaped and together form a circular cross-section. A first leg 510 and a second leg 512 are arcuately shaped and together form a circular cross-section complementary to first sidewall 506 and second sidewall 508. In various embodiments, mechanical connecting joint 500 is not circular, but rather may have other arcuate or square cross-sections, including, but not limited to, oval, oblong, elliptical, and the like.

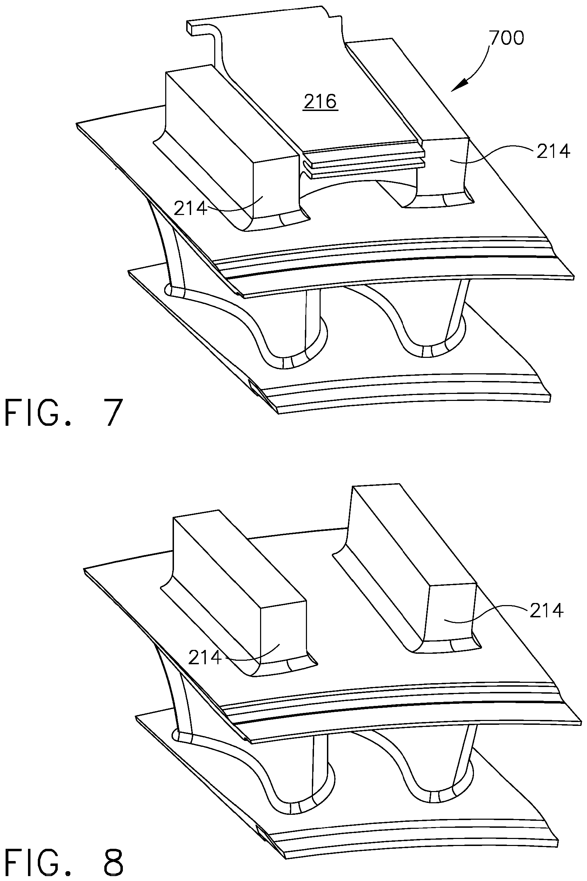

FIG. 7 is a perspective view of a cantilevered solid doublet CMC vane 700 including vane hanger 216, shank 214 and a metal mid seal 702. FIG. 8 is a perspective view cantilevered solid doublet CMC vane 700 showing only the CMC parts.

The above-described embodiments of an apparatus and system of joining components provide a cost-effective and reliable means for providing a rigid determinate attachment through relatively simple geometry and materials. More specifically, the apparatus and systems described herein facilitate the use of proven turbine attachment and assembly methods, which facilitates conventional sealing methods as well. As a result, the apparatus and systems described herein facilitate maintenance and assembly of components that operate in high temperature environments in a cost-effective and reliable manner.

This written description uses examples to describe the disclosure, including the best mode, and also to enable any person skilled in the art to practice the disclosure, including making and using any devices or systems and performing any incorporated methods. The scope of the invention is defined by the claims, and may include other examples that occur to those skilled in the art. Such other examples are intended to be within the scope of the claims if they have structural elements that do not differ from the literal language of the claims.

## Claims

1. A mechanical connecting joint (400) comprising:
a first joint member (402) formed of a material having a first coefficient of thermal expansion (CTE) value, the first joint member (402) comprising a first sidewall (404), a second opposite sidewall (406), and a body (408) extending therebetween;
a second joint member (403) formed of a material having a second CTE value, the second CTE being less than the first CTE, said second joint member (403) comprising:
a first leg (412) facing the first sidewall (404);
a second leg (414) facing the second sidewall (406);
a connecting member (416) extending between said first leg (412) and said second leg (414); and
further comprising:
a first gap (418) between said first joint member (402) and said first leg (412); and
a second gap (420) between said first joint member (402) and said second leg (414), wherein the first gap (418) defines a first distance (422) between said first joint member (402) and said first leg (412) at a first temperature and the first gap (418) defines a second distance (426) between said first joint member (402) and said first leg (412) at a second temperature, the second distance (426) being different than the first distance (422) and the second temperature being different than the first temperature; and
further comprising a locating pin (302) extending from within said first joint member (402) into said second joint member (403).

2. The mechanical connecting joint (400) of claim 1, wherein a change in the distance of the first gap and the second gap is inversely related to a change in temperature.

3. The mechanical connecting joint (500) of any preceding claim, wherein said first sidewall (506) and said second opposite sidewall (508) are arcuately shaped and together form a circular cross-section, said first leg (510) and said second leg (512) are arcuately shaped and together form a circular cross-section complementary to said first sidewall (506) and said second sidewall (508).

4. The mechanical connecting joint (500) of any preceding claim, wherein said first sidewall (506) and said second opposite sidewall (508) are arcuately shaped, said first leg (510) and said second leg (512) are arcuately shaped complementary to said first sidewall (506) and said second sidewall (508).

5. The mechanical connecting joint (400) of any preceding claim, wherein said first joint member (402) comprises a metallic material.

6. The mechanical connecting joint (400) of any preceding claim, wherein said second joint member (403) comprises a ceramic material.

7. The mechanical connecting joint (400) of any preceding claim, wherein said second joint member (403) comprises a ceramic matrix composite (CMC) material.

8. A vane attachment assembly comprising:
a plurality of airfoil vane shanks (214) extending from a vane platform (210), each of the airfoil vane shanks (214) comprising a ceramic matrix composite material (CMC) having a first coefficient of thermal expansion (CTE) and a slot (218) for allowing differential growth along a length (220) of the shank (214); and
a vane hanger (216) formed of a metal material having a second CTE, the vane hanger (216) positioned between adjacent ones of the plurality of airfoil vane shanks (214), a surface of the vane hanger (216) configured to expand outwardly with an increasing temperature towards the adjacent ones of the plurality of airfoil vane shanks (214);
further comprising a first bore (304) extending from a surface of the vane hanger (216) into the vane hanger (216) and a second bore (314) extending from a surface of one of the adjacent ones of the plurality of airfoil vane shanks (214) into the vane shank (214) and aligned with said first bore (304); and further comprising a pin (302) extending from within said first bore (304) into said second bore (314)

## Patentansprüche

1. Mechanisches Verbindungsgelenk (400), umfassend:
ein erstes Gelenkelement (402), das aus einem Material ausgebildet ist, das einen ersten Wärmeausdehnungskoeffizientenwert (CTE-Wert) aufweist, das erste Gelenkelement (402) umfassend eine erste Seitenwand (404), eine zweite gegenüberliegende Seitenwand (406) und einen Körper (408), der sich dazwischen erstreckt;
ein zweites Gelenkelement (403), das aus einem Material ausgebildet ist, das einen zweiten CTE-Wert aufweist, wobei der zweite CTE geringer als der erste CTE ist, das zweite Gelenkelement (403) umfassend:
einen ersten Schenkel (412), der der ersten Seitenwand (404) zugewandt ist;
einen zweiten Schenkel (414), der der zweiten Seitenwand (406) zugewandt ist;
ein Verbindungselement (416), das sich zwischen dem ersten Schenkel (412) und dem zweiten Schenkel (414) erstreckt; und
ferner umfassend:
einen ersten Spalt (418) zwischen dem ersten Gelenkelement (402) und dem ersten Schenkel (412); und
einen zweiten Spalt (420) zwischen dem ersten Gelenkelement (402) und dem zweiten Schenkel (414), wobei der erste Spalt (418) einen ersten Abstand (422) zwischen dem ersten Gelenkelement (402) und dem ersten Schenkel (412) bei einer ersten Temperatur definiert und der erste Spalt (418) einen zweiten Abstand (426) zwischen dem ersten Gelenkelement (402) und dem ersten Schenkel (412) bei einer zweiten Temperatur definiert, wobei sich der zweite Abstand (426) von dem ersten Abstand (422) unterscheidet und sich die zweite Temperatur von der ersten Temperatur unterscheidet; und
ferner umfassend einen Positionierstift (302), der sich von innerhalb des ersten Gelenkelements (402) in das zweite Gelenkelement (403) erstreckt.

2. Mechanisches Verbindungsgelenk (400) nach Anspruch 1, wobei eine Änderung des Abstands des ersten Spalts und des zweiten Spalts umgekehrt proportional zu einer Temperaturänderung ist.

3. Mechanisches Verbindungsgelenk (500) nach einem der vorstehenden Ansprüche, wobei die erste Seitenwand (506) und die zweite gegenüberliegende Seitenwand (508) bogenförmig geformt sind und zusammen einen kreisförmigen Querschnitt ausbilden, wobei der erste Schenkel (510) und der zweite Schenkel (512) bogenförmig geformt sind und zusammen einen kreisförmigen Querschnitt ausbilden, der zu der ersten Seitenwand (506) und der zweiten Seitenwand (508) komplementär ist.

4. Mechanisches Verbindungsgelenk (500) nach einem der vorstehenden Ansprüche, wobei die erste Seitenwand (506) und die zweite gegenüberliegende Seitenwand (508) bogenförmig geformt sind, wobei der erste Schenkel (510) und der zweite Schenkel (512) komplementär zu der ersten Seitenwand (506) und der zweiten Seitenwand (508) geformt sind.

5. Mechanisches Verbindungsgelenk (400) nach einem der vorstehenden Ansprüche, wobei das erste Gelenkelement (402) ein metallisches Material umfasst.

6. Mechanisches Verbindungsgelenk (400) nach einem der vorstehenden Ansprüche, wobei das zweite Gelenkelement (403) ein keramisches Material umfasst.

7. Mechanisches Verbindungsgelenk (400) nach einem der vorstehenden Ansprüche, wobei das zweite Gelenkelement (403) ein Keramikmatrixverbundmaterial (CMC-Material) umfasst.

8. Schaufelbefestigungsanordnung, umfassend:
eine Vielzahl von Schaufelblattschäften (214), die sich von einer Schaufelplattform (210) erstrecken, jeder der Schaufelblattschäfte (214) umfassend ein Keramikmatrixverbundmaterial (CMC-Material), das einen ersten Wärmeausdehnungskoeffizienten (CTE) und einen Schlitz (218) aufweist, um ein Differentialwachstum entlang einer Länge (220) des Schafts (214) zu ermöglichen; und
eine Schaufelaufhängung (216), die aus einem Metallmaterial ausgebildet ist, das einen zweiten CTE aufweist, wobei die Schaufelaufhängung (216) zwischen angrenzenden der Vielzahl von Schaufelblattschäften (214) positioniert ist, wobei eine Oberfläche der Schaufelaufhängung (216) konfiguriert ist, um sich mit einer zunehmenden Temperatur in Richtung der angrenzenden der Vielzahl von Schaufelblattschäften (214) nach außen zu erweitern;
ferner umfassend eine erste Bohrung (304), die sich von einer Oberfläche der Schaufelaufhängung (216) in die Schaufelaufhängung (216) erstreckt, und eine zweite Bohrung (314), die sich von einer Oberfläche eines der benachbarten der Vielzahl von Schaufelblattschäften (214) in den Schaufelschaft (214) erstreckt und mit der ersten Bohrung (304) ausgerichtet ist; und ferner umfassend einen Stift (302), der sich von innerhalb der ersten Bohrung (304) in die zweite Bohrung (314) erstreckt

## Revendications

1. Joint de raccord mécanique (400) comprenant :
un premier élément de joint (402) formé à partir d'un matériau ayant une première valeur de coefficient de dilatation thermique (CTE), le premier élément de joint (402) comprenant une première paroi latérale (404), une seconde paroi latérale opposée (406) et un corps (408) s'étendant entre elles ;
un second élément de joint (403) formé à partir d'un matériau ayant une seconde valeur de CTE, le second CTE étant inférieur au premier CTE, ledit second élément de joint (403) comprenant :
une première jambe (412) faisant face à la première paroi latérale (404) ;
une seconde jambe (414) faisant face à la seconde paroi latérale (406) ;
un élément de raccord (416) s'étendant entre ladite première jambe (412) et ladite seconde jambe (414) ; et
comprenant en outre :
un premier espace (418) entre ledit premier élément de joint (402) et ladite première jambe (412) ; et
un second espace (420) entre ledit premier élément de joint (402) et ladite seconde jambe (414), le premier espace (418) définissant une première distance (422) entre ledit premier élément de joint (402) et ladite première jambe (412) à une première température et le premier espace (418) définissant une seconde distance (426) entre ledit premier élément de joint (402) et ladite première jambe (412) à une seconde température, la seconde distance (426) étant différente de la première distance (422) et la seconde température étant différente de la première température ; et
comprenant en outre une broche de positionnement (302) s'étendant depuis l'intérieur dudit premier élément de joint (402) jusque dans ledit second élément de joint (403).

2. Joint de raccord mécanique (400) selon la revendication 1, dans lequel un changement de la distance du premier espace et du second espace est réciproquement lié à un changement de température.

3. Joint de raccord mécanique (500) selon l'une quelconque revendication précédente, dans lequel ladite première paroi latérale (506) et ladite seconde paroi latérale opposée (508) ont une forme arquée et forment ensemble une section transversale circulaire, ladite première jambe (510) et ladite seconde jambe (512) ont une forme arquée et forment ensemble une section transversale circulaire de manière complémentaire par rapport à ladite première paroi latérale (506) et ladite seconde paroi latérale (508).

4. Joint de raccord mécanique (500) selon l'une quelconque revendication précédente, dans lequel ladite première paroi latérale (506) et ladite seconde paroi latérale opposée (508) ont une forme arquée, ladite première jambe (510) et ladite seconde jambe (512) ont une forme arquée de manière complémentaire par rapport à ladite première paroi latérale (506) et ladite seconde paroi latérale (508).

5. Joint de raccord mécanique (400) selon l'une quelconque revendication précédente, dans lequel ledit premier élément de joint (402) comprend un matériau métallique.

6. Joint de raccord mécanique (400) selon l'une quelconque revendication précédente, dans lequel ledit second élément de joint (403) comprend un matériau céramique.

7. Joint de raccord mécanique (400) selon l'une quelconque revendication précédente, dans lequel ledit second élément de joint (403) comprend un matériau composite à matrice céramique (CMC).

8. Ensemble de fixation d'aube comprenant :
une pluralité de tiges d'aube de profil (214) s'étendant à partir d'une plate-forme d'aube (210), chacune des tiges d'aube de profil (214) comprenant un matériau composite à matrice céramique (CMC) ayant un premier coefficient de dilatation thermique (CTE) et une fente (218) pour permettre une croissance différentielle le long d'une longueur (220) de la tige (214) ; et
un dispositif de suspension d'aube (216) formé à partir d'un matériau métallique ayant un second CTE, le dispositif de suspension d'aube (216) étant positionné entre des tiges adjacentes de la pluralité de tiges d'aube de profil (214), une surface de la suspension d'aube (216) étant conçue pour se dilater vers l'extérieur avec une température croissante vers les tiges adjacentes de la pluralité de tiges d'aube de profil (214) ;
comprenant en outre un premier alésage (304) s'étendant à partir d'une surface de la suspension d'aube (216) jusque dans la suspension d'aube (216) et un deuxième alésage (314) s'étendant à partir d'une surface de l'une des tiges adjacentes de la pluralité de tiges d'aube de profil (214) jusque dans la tige d'aube (214) et aligné avec ledit premier alésage (304) ; et comprenant en outre une broche (302) s'étendant à partir de l'intérieur dudit premier alésage (304) jusque dans ledit deuxième alésage (314)
